# EUROPEAN PATENT APPLICATION

(11) **EP 4 819 258 A1**
(43) Date of publication of application: **07.10.2026**
(21) Application number: 26163456.2
(22) Date of filing: 10.03.2026
(51) Int. Cl.: H01M 8/04089, H01M 8/0438

(54) **SYSTEMS AND METHODS FOR IMPROVING FUEL CELL EFFICIENCY**

(30) Priority: 28.03.2025 IN 202541029836
(71) Applicant: Cummins Inc., Columbus, IN 47201 (US)
(72) Inventor: RASAL, Purva, 415639 Ratnagiri (IN)
(74) Representative: Cleveland Scott York

(57) **Abstract**

A system and method are disclosed for providing a fuel mixture to a fuel cell. The system and method recirculate at least a portion of the fuel mixture output from a fuel ejector that is to be supplied to the fuel cell but relieved due to an over-pressure condition upstream of the fuel cell. The relieved fuel mixture is at least partially returned to the fuel ejector in a controlled manner so that the relieved fuel mixture is not wasted and able to be re-supplied to the fuel cell to produce electricity.

## Description

### Field of the Disclosure

The present disclosure relates generally to fuel cell systems, and more particularly to a system and method for improving fuel cell efficiency and reducing operating costs.

### BACKGROUND

Fuel cells can use hydrogen gas or other fuel in a gas mixture as a fuel source to produce electrical power. For example, hydrogen fuel cells use a hydrogen gas mixture and oxygen from air to form water and electricity via electrolysis in a fuel cell membrane. The electricity is then used as a main power source to rotate an output shaft in order to, for example, propel a vehicle.

A pressure relief valve is typically employed in the hydrogen supply line upstream of the fuel cell to protect the fuel cell from over-pressure condition in the fuel mixture that is being supplied to the fuel cell. The pressure relief valve opens in response to an over-pressure condition to relieve the hydrogen gas mixture upstream of the fuel cell, preventing the over-pressure condition from reaching the fuel cell. The hydrogen gas mixture is relieved to the exhaust system until the over-pressure condition is no longer present and the pressure relief valve is closed. However, relieving the hydrogen gas mixture to the exhaust results in a waste of hydrogen fuel, which is inefficient and increases fuel costs. Therefore, there remains a need for the unique systems and methods disclosed herein.

### DISCLOSURE OF ILLUSTRATIVE EMBODIMENTS

For the purposes of clearly, concisely and exactly describing illustrative embodiments of the present disclosure, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created and that the invention includes and protects such alterations, modifications, and further applications of the exemplary embodiments as would occur to one skilled in the art.

### SUMMARY

The present disclosure includes a system and method for providing a fuel mixture to a fuel cell. The system and method recirculate at least a portion of a fuel mixture output from a fuel ejector that is to be supplied to a fuel cell but relieved due to an over-pressure condition upstream of the fuel cell. The relieved fuel mixture is at least partially returned to the fuel ejector in a controlled manner so that the relieved fuel mixture is not wasted and able to be re-supplied to the fuel cell to produce electricity.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The description herein makes reference to the accompanying drawings wherein like numerals refer to like parts throughout the several views, and wherein:
FIG. 1 is a simplified schematic diagram of a fuel cell system.
FIG. 2 is a simplified schematic diagram of a pressure relief subsystem of the fuel cell system of FIG. 1.
FIG. 3 is a flow diagram of an exemplary procedure for operating the fuel cell system of FIG. 1 and/or the pressure relief subsystem of FIG. 2.

### DETAILED DESCRIPTION OF ILLUSTRATIVE EMBODIMENTS

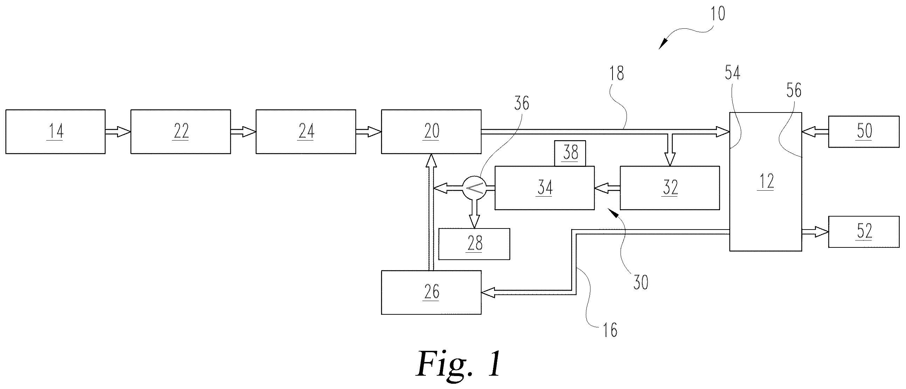

With reference to FIG. 1, there is illustrated a simplified fuel cell system 10 including a fuel ejector 20 and a fuel cell 12. Fuel cell 12 generates power by using hydrogen gas from fuel source 14 and oxygen from air 50 for electrolysis in one or more membranes to generate electricity. In an embodiment, fuel cell 12 includes a proton exchange membrane, catalyst membranes on opposite sides of the proton exchange membrane, and gas diffusion layers on opposites outer sides of the catalyst membranes. However, other fuel cell configurations are also contemplated for use in the system and methods of the present disclosure.

Fuel cell 12 includes an anode side 54 that receives the fuel mixture from fuel ejector 20 and a cathode side 56 that receives the air. Cathode side 56 includes an outlet 52 for air and water vapor remaining after electrolysis. The anode side 54 of fuel cell 12 produces residuals including hydrogen gas along with nitrogen and water vapor. The residuals from fuel cell 12 are recycled from the anode side 54 in a fuel cell return 16 connected between fuel cell 12 and fuel ejector 20.

In an embodiment, fuel cell return 16 includes a recirculator 26. Recirculator 26 is operable to assist in returning the residuals in fuel cell return 16 back to fuel ejector 20. Recirculator 26 can include various forms, including a blower and/or pump, operable to supply the residuals to fuel ejector 20 at the desired pressure.

Fuel cell system 10 also includes a fuel cell supply 18 connected between fuel ejector 20 and fuel cell 12. Fuel cell supply 18 provides a fuel mixture of the hydrogen gas and residuals formed in fuel ejector 20 to fuel cell 12. Fuel ejector 20 entrains the two incoming gaseous flows and so that the fuel mixture is output to fuel cell supply 18 and able to power fuel cell 12.

In an embodiment, fuel source 14 is connected to a first inlet of fuel ejector 20. A shut-off valve 22 is provided to start and stop hydrogen gas flow from fuel source 14 to fuel ejector 20. A pressure control valve 24 is provided to control a pressure at which the hydrogen gas from fuel source 14 is provided to the first inlet of fuel ejector 20. The residuals from fuel cell return 16 are provided to a second inlet of fuel ejector 20. Fuel ejector 20 includes an outlet that supplies the fuel mixture of the hydrogen fuel and residuals to fuel cell supply 18.

Fuel cell supply 18 includes a pressure relief valve 32 between fuel ejector 20 and fuel cell 12. Pressure relief valve 32 is normally closed but is configured to open in response to an over-pressure condition of the fuel mixture within in fuel cell supply 18 to prevent damage to fuel cell 12 by an over-pressure event. Pressure relief valve 32 can be configured to automatically open to relieve the fuel mixture from fuel cell supply 18 in response to an over-pressure condition. For example, an over-pressure condition can be created by a fuel mixture pressure that exceeds a nominal operating pressure by more than a threshold amount, such as 10% to 20%. However, any type of over-pressure condition in which pressure relief valve 32 is opened is contemplated.

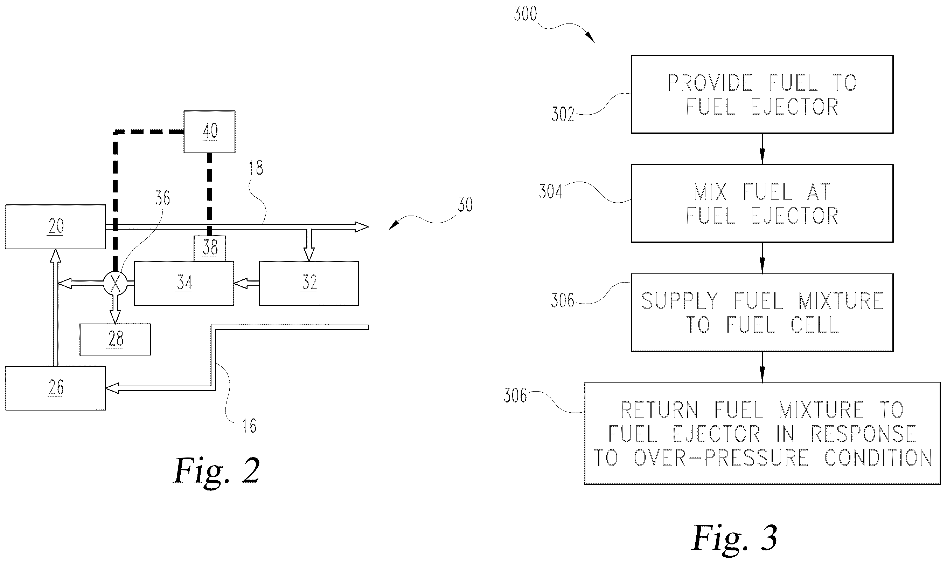

Fuel cell system 10 further includes a pressure relief subsystem 30 that connects fuel cell supply 18 to fuel cell return 16 and/or fuel ejector 20, as shown in further detail in FIG. 2. In an embodiment, pressure relief subsystem 30 includes pressure relief valve 32 and an accumulator 34 downstream of pressure relief valve 32. Accumulator 34 receives and stores temporarily the fuel mixture relieved by pressure relief valve 32 in response to the over-pressure condition.

The relieved fuel mixture stored in accumulator 34 can be provided to fuel cell return 16 and/or fuel ejector 20 in controlled manner so that the relieved fuel mixture is not vented to exhaust 28. However, accumulator 34 can also be connected to exhaust 28 to provide an outlet for the stored fuel mixture in the event the fuel mixture stored in accumulator 34 experiences an over-pressure condition and is not able to supply the relieved fuel mixture to fuel cell return and/or fuel ejector 20.

In an embodiment, pressure relief subsystem 30 includes a control valve 36. Control valve 36 can be a metering valve to provide a metered amount of relieved fuel mixture from accumulator 34 to fuel cell return 16 and/or to fuel ejector 20. Control valve 36 may also include a check valve feature, or a separate check valve can be provided, to prevent the flow of residuals from fuel cell return 16 to accumulator 34.

An electronic controller 40 can be connected to an actuator of control valve 36. Electronic controller 40 can provide control commands to control the flow of relieved fuel mixture stored in accumulator 34 to fuel cell return 16 and/or fuel ejector 20. In an embodiment, electronic controller 40 can position control valve 36 to provide all or a portion of the relieved fuel mixture stored in accumulator 34 to exhaust 28 in addition to, or alternatively to, providing relieved fuel from accumulator 34 to fuel cell return 16 and/or to fuel ejector 20.

In an embodiment, electronic controller 40 receives pressure signals from a pressure sensor 38. Pressure sensor 38 is operable to provide signals indicative of a pressure conditions of the relieved fuel mixture stored in accumulator 34. In an embodiment, in response to a minimum pressure condition of the fuel mixture in accumulator 34, control valve 36 is positioned to supply the stored fuel mixture to fuel cell return 16 and/or fuel ejector 20. In an embodiment, in response to the storage over-pressure condition in accumulator 34, controller 40 is operable to position control valve 36 to provide all or a portion of the relieved fuel mixture stored in accumulator 34 to exhaust 28 to mitigate the storage over-pressure condition.

Referring to FIG. 3, a method 300 is shown for operating fuel cell system 10 including pressure relief subsystem 30. In an embodiment, method 300 can be implemented by electronic controller 40, such as via instructions encoded on a computer readable medium that are executed by a processor of electronic controller 40.

Method 300 begins at an operation 302 to provide fuel to fuel ejector 20. For example, hydrogen fuel from fuel source 14 can be provided at a regulated pressure to an inlet of fuel ejector 20. In an embodiment, the fuel is gaseous hydrogen fuel stored under pressure in one or more fuel storage tanks that are provided with fuel source 14.

Method 300 continues at operation 304 to mix the fuel at fuel ejector 20. In an embodiment, fuel from fuel source 14 is mixed with residuals from fuel cell 12 that are returned to fuel ejector 20 via fuel cell return 16 to create a fuel mixture that is output from fuel ejector 20. Method 300 continues at operation 306 to supply the fuel mixture output from fuel ejector 20 to fuel cell 12, such as through fuel cell supply 18.

Method 300 continued from operation 306 at operation 308 to return relieved fuel mixture to fuel ejector 20 in response to an over-pressure condition of the fuel mixture in fuel cell supply 18. For example, the fuel mixture relieved by pressure relief valve 32 can be returned directly to fuel ejector 20 or to fuel cell return 16. In an embodiment, the relieved fuel mixture is stored in accumulator 34 and is released from accumulator 34 in a controlled manner to fuel ejector 20 and/or to fuel cell return 16.

In an embodiment, after storing the relieved fuel mixture in accumulator 34, the stored relieved fuel mixture is returned at a controlled rate to fuel cell return 16 and/or fuel ejector 20 after the over-pressure condition in fuel cell supply 18 is no longer present or at another suitable time. In an embodiment, all or a portion of the accumulated relieved fuel mixture is returned to fuel cell return 16 and/or fuel ejector 20 in response to a pressure condition of the relieved fuel mixture stored in accumulator 34 meeting a minimum threshold. In an embodiment, all or a portion of the accumulated relieved fuel mixture is vented to exhaust 28 and/or at least partially returned to fuel cell return 16 and/or fuel ejector 20 in response to a storage over-pressure condition of the relieved fuel mixture stored in accumulator 34.

In an embodiment, the fuel mixture is returned to fuel cell return 16, fuel ejector 20, and/or exhaust 28 by controlling a flow of the accumulated fuel mixture output from accumulator 34 with control valve 36 in response to a storage over-pressure condition of the stored fuel mixture measured by pressure sensor 38. In an embodiment, the fuel mixture returned to fuel ejector 20 is returned to fuel cell return 16 upstream of fuel ejector 20. In an embodiment, the fuel mixture returned to fuel ejector 20 is returned to fuel cell return 16 downstream of recirculator 26 in fuel cell return 16.

Electronic controller 40 (also referred to as ECU 40) can be configured to control various operational aspects of system 10 and/or subsystem 30, including the flow of relieved fuel mixture stored in accumulator 34 to fuel cell return 16, fuel ejector 20, and/or exhaust 28, among other operations. The electronic controller 40 can be implemented in a number of ways. Further, the electronic controller 40 can execute operating logic that defines various control, management, and/or regulation functions. The operating logic may be in the form of one or more microcontroller or microprocessor routines stored in a non-transitory memory, dedicated hardware, such as a hardwired state machine, analog calculating machine, various types of programming instructions, and/or other forms as would occur to those skilled in the art.

Electronic controller 40 may be provided as a single component, or a collection of operatively coupled components, and may comprise digital circuitry, analog circuitry, or a hybrid combination of both of these types. When of a multi-component form, electronic controller 40 may have one or more components remotely located relative to the others in a distributed arrangement. Electronic controller 40 can include multiple processing units arranged to operate independently, in a pipeline processing arrangement, in a parallel processing arrangement, or the like. In one embodiment, electronic controller 40 includes several programmable microprocessing units of a solid-state, integrated circuit type that are distributed throughout the system 10 and/or subsystem 30 that each includes one or more processing units and non-transitory memory.

For the depicted embodiment, electronic controller 40 includes a computer network interface to facilitate communications using standard Controller Area Network (CAN) communications or the like among various system control units. It should be appreciated that the depicted modules or other organizational units of electronic controller 40 refer to certain operating logic performing indicated operations that may each be implemented in a physically separate controller of electronic controller 40 and/or may be virtually implemented in the same controller. Electronic controller 40 may include one or more organizational units or circuits that may be implemented in hardware and/or as computer instructions on a non-transient computer readable storage medium and may be distributed across various hardware or computer based components.

Example and non-limiting organizational units of electronic controller 40 include, for example, sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements.

Electronic controller 40 and/or any of its constituent processors/controllers may include one or more signal conditioners, modulators, demodulators, Arithmetic Logic Units (ALUs), Central Processing Units (CPUs), limiters, oscillators, control clocks, amplifiers, signal conditioners, filters, format converters, communication ports, clamps, delay devices, memory devices, Analog to Digital (A/D) converters, Digital to Analog (D/A) converters, and/or different circuitry or functional components as would occur to those skilled in the art to perform the desired communications.

Various aspects of the present disclosure are contemplated. According to one aspect, a system for providing a fuel mixture to a fuel cell is provided. The system includes a fuel cell supply for supplying the fuel mixture to the fuel cell. The fuel cell supply including a pressure relief valve. The system also includes a fuel cell return for receiving residuals produced by electrolysis of the fuel mixture in the fuel cell and a fuel ejector connected to a fuel source to receive a fuel. The fuel ejector is configured to mix the residuals with the fuel and output the fuel mixture to the fuel cell supply. The system also includes an accumulator connected to the pressure relief valve to receive the fuel mixture relieved by the pressure relief valve in response to an over-pressure condition of the fuel mixture in the fuel cell supply. The accumulator is connected to the fuel ejector and/or the fuel cell return.

In an embodiment, the system includes a control valve between the accumulator and the fuel ejector and/or the fuel cell return.

In an embodiment, the system includes an electronic controller connected to the accumulator and the control valve. The electronic controller is configured to open the control valve to supply the fuel mixture to the fuel ejector and/or the fuel cell return in response to a storage over-pressure condition of the fuel mixture in the accumulator.

In an embodiment, the system includes a pressure sensor operable to output signals indicative of the storage over-pressure condition in the accumulator to the electronic controller.

In an embodiment, the control valve is connected to an exhaust, and the electronic controller is configured to open the control valve to the exhaust in response to the storage over-pressure event in the accumulator to provide at least a portion of the fuel mixture stored in the accumulator to the exhaust.

In an embodiment, the fuel ejector includes a first inlet connected to the fuel source and a second inlet connected to the fuel cell return.

In an embodiment, the accumulator is connected to the fuel cell return upstream of the second inlet.

In an embodiment, the fuel cell return includes a recirculator operable to assist in circulating the residuals to the second inlet.

In an embodiment, the recirculator includes a recirculation blower.

In an embodiment, the accumulator is connected to the fuel cell return downstream of the recirculator.

In an embodiment, the system includes a fuel source for storing the fuel and a pressure control valve connecting the fuel source to the fuel ejector.

In an embodiment, the system includes a shutoff valve between the fuel source and the pressure control valve.

In an embodiment, the fuel is hydrogen gas.

According to another aspect of the present disclosure, a method for providing a fuel mixture to a fuel cell is provided. The method includes providing a fuel from a fuel source to a fuel ejector; mixing the fuel in the fuel ejector with residuals from the fuel cell that are returned to the fuel ejector through a fuel cell return; supplying a fuel mixture of the fuel and the residuals from the fuel ejector to the fuel cell through a fuel cell supply; and returning the fuel mixture relieved from the fuel cell supply to the fuel ejector in response to an over-pressure condition of the fuel mixture in the fuel cell supply.

In an embodiment, returning the fuel mixture includes relieving the fuel mixture from the fuel cell supply via a pressure relief valve in response to the over-pressure condition.

In an embodiment, the method includes storing the fuel mixture relieved from the fuel cell supply before returning the fuel mixture to the fuel ejector.

In an embodiment, returning the fuel mixture includes controlling a flow of the stored fuel mixture in response to a storage over-pressure condition of the stored fuel mixture.

In an embodiment, the method includes venting at least a portion of the stored fuel mixture to an exhaust in response to the storage over-pressure condition of the stored fuel mixture.

In an embodiment, returning the fuel mixture to the fuel ejector includes returning the fuel mixture to the fuel cell return upstream of the fuel ejector.

In an embodiment, returning the fuel mixture to the fuel ejector includes returning the fuel mixture to the fuel cell return downstream of a recirculator in the fuel cell return.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A system for providing a fuel mixture to a fuel cell, the system comprising:
a fuel cell supply for supplying the fuel mixture to the fuel cell, the fuel cell supply including a pressure relief valve;
a fuel cell return for receiving residuals produced by electrolysis of the fuel mixture in the fuel cell;
a fuel ejector connected to a fuel source to receive a fuel, the fuel ejector configured to mix the residuals with the fuel and output the fuel mixture to the fuel cell supply; and
an accumulator connected to the pressure relief valve to receive the fuel mixture relieved by the pressure relief valve in response to an over-pressure condition of the fuel mixture in the fuel cell supply, wherein the accumulator is connected to the fuel ejector and/or the fuel cell return.

2. The system according to claim 1, comprising a control valve between the accumulator and the fuel ejector and/or the fuel cell return.

3. The system according to claim 2, comprising an electronic controller connected to the accumulator and the control valve, wherein the electronic controller is configured to open the control valve to supply the fuel mixture to the fuel ejector and/or the fuel cell return in response to a storage over-pressure condition of the fuel mixture in the accumulator.

4. The system according to claim 3, comprising a pressure sensor operable to output signals indicative of the storage over-pressure condition in the accumulator to the electronic controller; and/or
wherein the control valve is connected to an exhaust, and the electronic controller is configured to open the control valve to the exhaust in response to the storage over-pressure event in the accumulator to provide at least a portion of the fuel mixture stored in the accumulator to the exhaust.

5. The system according to claim 1, wherein the fuel ejector includes a first inlet connected to the fuel source and a second inlet connected to the fuel cell return.

6. The system according to claim 5, wherein the accumulator is connected to the fuel cell return upstream of the second inlet; and/or
wherein the fuel cell return includes a recirculator operable to assist in circulating the residuals to the second inlet.

7. The system according to claim 6, wherein the recirculator includes a recirculation blower; and/or
wherein the accumulator is connected to the fuel cell return downstream of the recirculator.

8. The system according to claim 1, comprising:
a fuel source for storing the fuel; and
a pressure control valve connecting the fuel source to the fuel ejector.

9. The system according to claim 8, comprising a shutoff valve between the fuel source and the pressure control valve.

10. The system according to claim 1, wherein the fuel is hydrogen gas.

11. A method for providing a fuel mixture to a fuel cell, the method comprising:
providing a fuel from a fuel source to a fuel ejector;
mixing the fuel in the fuel ejector with residuals from the fuel cell that are returned to the fuel ejector through a fuel cell return;
supplying a fuel mixture of the fuel and the residuals from the fuel ejector to the fuel cell through a fuel cell supply; and
returning the fuel mixture relieved from the fuel cell supply to the fuel ejector in response to an over-pressure condition of the fuel mixture in the fuel cell supply.

12. The method according to claim 11, wherein returning the fuel mixture includes relieving the fuel mixture from the fuel cell supply via a pressure relief valve in response to the over-pressure condition; and/or
wherein returning the fuel mixture to the fuel ejector includes returning the fuel mixture to the fuel cell return upstream of the fuel ejector; and/or
wherein returning the fuel mixture to the fuel ejector includes returning the fuel mixture to the fuel cell return downstream of a recirculator in the fuel cell return.

13. The method according to claim 12, comprising storing the fuel mixture relieved from the fuel cell supply before returning the fuel mixture to the fuel ejector.

14. The method according to claim 13, wherein returning the fuel mixture includes controlling a flow of the stored fuel mixture in response to a storage over-pressure condition of the stored fuel mixture.

15. The method according to claim 14, comprising venting at least a portion of the stored fuel mixture to an exhaust in response to the storage over-pressure condition of the stored fuel mixture.
